# EUROPEAN PATENT SPECIFICATION

(11) **EP 3 027 351 B1**
(45) Date of publication and mention of the grant of the patent: **11.03.2020**
(21) Application number: 14752690.9
(22) Date of filing: 29.07.2014
(51) Int. Cl.: B23K 35/32, B23K 35/36, B23K 35/362, B23K 35/34, B23K 25/00, B23K 26/34, B23K 26/342, B23K 26/346

(54) **FLUX FOR LASER WELDING**
FLUSSMITTEL ZUM LASERSCHWEISSEN
FLUX POUR SOUDAGE AU LASER

(30) Priority: 29.07.2013 US 201361859317 P; 28.07.2014 US 201414341888
(43) Date of publication of application: 08.06.2016
(73) Proprietor: Siemens Energy, Inc., Orlando, FL 32826-2399 (US)
(72) Inventor: BRUCK, Gerald J., Oviedo, Florida 32766 (US); KAMEL, Ahmed, Orlando, Florida 32828 (US)
(74) Representative: Maier, Daniel Oliver
(86) International application number: PCT/US2014/048543
(87) International publication number: WO 2015/017370

(56) References cited:
- EP-A1- 1 537 940
- CN-A- 101 954 553
- CN-A- 102 601 544
- GB-A- 692 772
- GB-A- 762 980
- GB-A- 1 135 131
- RU-C- 1 648 001
- US-A1- 2004 187 961

## Description

### FIELD OF THE INVENTION

This invention relates generally to the field of metals joining, and more particularly to the welding, repair and additive manufacturing of superalloy materials using a laser energy heat source, and to a flux material for laser welding.

### BACKGROUND OF THE INVENTION

Welding processes vary considerably depending upon the type of material being welded. Some materials are more easily welded under a variety of conditions, while other materials require special processes in order to achieve a structurally sound joint without degrading the surrounding substrate material.

Common arc welding generally utilizes a consumable electrode as the feed material. In order to provide protection from the atmosphere for the molten material in the weld pool, an inert cover gas and /or a flux material may be used when welding many alloys including, e.g. steels, stainless steels, and nickel based alloys. Inert and combined inert and active gas processes include gas tungsten arc welding (GTAW) (also known as tungsten inert gas (TIG)) and gas metal arc welding (GMAW) (also known as metal inert gas (MIG) and metal active gas (MAG)). Flux protected processes include submerged arc welding (SAW) where flux is commonly fed, flux cored arc welding (FCAW) where the flux is included in the core of the electrode, and shielded metal arc welding (SMAW) where the flux is coated on the outside of the filler electrode.

The use of energy beams as a heat source for welding is also known. For example, laser energy has been used to melt pre-placed stainless steel powder onto a carbon steel substrate with conventional powdered flux material providing shielding of the melt pool. The flux powder may be mixed with the stainless steel powder or applied as a separate covering layer. To the knowledge of the inventors, flux materials have not been used when welding superalloy materials.

It is recognized that superalloy materials are among the most difficult materials to weld due to their susceptibility to weld solidification cracking and strain age cracking. The term "superalloy" is used herein as it is commonly used in the art; i.e., a highly corrosion and oxidation resistant alloy that exhibits excellent mechanical strength and resistance to creep at high temperatures. Superalloys typically include a high nickel or cobalt content. Examples of superalloys include alloys sold under the trademarks and brand names Hastelloy, Inconel alloys (e.g. IN 738, IN 792, IN 939), Rene alloys (e.g. Rene N5, Rene 41, Rene 80, Rene 108, Rene 142, Rene 220), Haynes alloys (282), Mar M, CM 247, CM 247 LC, C263, 718, X-750, ECY 768, 282, X45, PWA 1480, PWA 1483,PWA 1484, CMSX single crystal alloys (e.g., CMSX-4, CMSX-8, CMSX-10), GTD 111, GTD 222, MGA 1400, MGA 2400, PSM 116, IN 713C, Mar-M-200, , IN 100, IN 700, Udimet 600, Udimet 500 and titanium aluminide.

Weld repair of some superalloy materials has been accomplished successfully by preheating the material to a very high temperature (for example to above 1600 °F or 870 °C) in order to significantly increase the ductility of the material during the repair. This technique is referred to as hot box welding or superalloy welding at elevated temperature (SWET) weld repair, and it is commonly accomplished using a manual GTAW process. However, hot box welding is limited by the difficulty of maintaining a uniform component process surface temperature and the difficulty of maintaining complete inert gas shielding, as well as by physical difficulties imposed on the operator working in the proximity of a component at such extreme temperatures.

Some superalloy material welding applications can be performed using a chill plate to limit the heating of the substrate material; thereby limiting the occurrence of substrate heat affects and stresses causing cracking problems. However, this technique is not practical for many repair applications where the geometry of the parts does not facilitate the use of a chill plate.

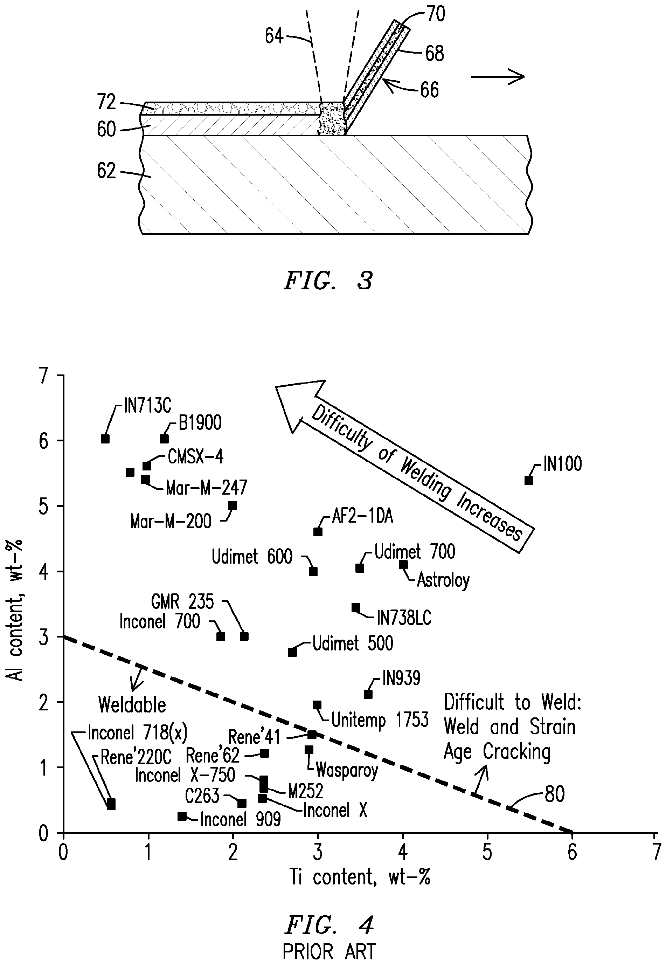

FIG. 4 is a conventional chart illustrating the relative weldability of various alloys as a function of their aluminum and titanium content. Alloys such as Inconel® 718 which have relatively lower concentrations of these elements, and consequentially relatively lower gamma prime content, are considered relatively weldable, although such welding is generally limited to low stress regions of a component. Alloys such as Inconel® 939 which have relatively higher concentrations of these elements are generally not considered to be weldable, or can be welded only with the special procedures discussed above which increase the temperature/ductility of the material and which minimize the heat input of the process. For purposes of discussion herein, a dashed line 80 indicates a border between a zone of weldability below the line 80 and a zone of non-weldability above the line 80. The line 80 intersects 3 wt.% aluminum on the vertical axis and 6 wt.% titanium on the horizontal axis. Within the zone of non-weldability, the alloys with the highest aluminum content are generally found to be the most difficult to weld.

It is also known to utilize selective laser melting (SLM) or selective laser sintering (SLS) to melt a thin layer of superalloy powder particles onto a superalloy substrate. The melt pool is shielded from the atmosphere by applying an inert gas, such as argon, during the laser heating. These processes tend to trap the oxides (e.g. aluminum and chromium oxides) that are adherent on the surface of the particles within the layer of deposited material, resulting in porosity, inclusions and other defects associated with the trapped oxides. Post process hot isostatic pressing (HIP) is often used to collapse these voids, inclusions and cracks in order to improve the properties of the deposited coating.

As new and higher alloy content superalloys continue to be developed, the challenge to develop commercially feasible joining processes for superalloy materials continues to grow.

CN 102 601 544 A discloses a high-alkalinity high-tenacity low-hydrogen agglomerated flux, which comprises the following components by weight: 18-21.5% MgO, 33-35% CaF₂, 15-20% Al₂O₃, 17-21% SiO₂, 3.5-8% CaO, 1-5% MnO, 2-5% BaCO₃, and less than or equal to 3% FeO, wherein the total weight of the components is 100%.

RU 1 648 001 C discloses a flux comprising aluminium oxide, magnesium oxide, silicon oxide, ferrochrome, metallic chrome, ferrotungsten, ferromolybdenum, calcium fluoride, sodium silicate, manganic oxide, calcium oxide, potassium oxide or sodium oxide, and caesium carbonate, in the following ratio of the components (wt. %): aluminium oxide 28-31; magnesium oxide 13-17; silicon oxide 11-16; ferrochrome 2.4-3.6; metallic chrome 4-6; ferrotungsten 1-2; ferromolybdenum 0.8-1.8; sodium silicate 0.08-0.012; manganic oxide 0.02-0.03; calcium oxide 1.2-5.4; potassium oxide or sodium oxide 0.8-1.8; caesium carbonate 0.1 -0.2; and balance calcium fluoride.

GB 762 980 A discloses a flux composition including silicates or titanates of calcium, magnesium, aluminium, manganese, titanium, iron, barium, chromium and zirconium, or the components of such silicates and titanates, namely silica or titania, and the corresponding metallic oxide or oxides. Also disclosed is the addition of a metallic carbide.

GB 692 772 A discloses a flux composition including manganese oxide, and a metallic fluoride, e.g. calcium fluoride or fluorspar, although aluminium fluoride, sodium aluminium fluoride, or sodium fluoride may be employed. Also disclosed is the addition of a metallic carbide, e.g. chromium carbide or tungsten carbide. Further disclosed is the addition of ferro-molybdenum, ferro-chrome, and ferro-vanadium.

CN 101 954 553 A discloses a flux composition comprising the following components in percentage by weight: 20 to 30 percent dead-burned magnesite clinker, 8 to 18 percent fluorite, 20 to 30 percent corundum, 1 to 3 percent elpasolite, 10 to 20 percent grammite, 2 to 8 percent strontium carbonate, 1 to 5 percent rutile, 1 to 3 percent silicon iron, 1 to 3 percent ferrotitanium, 1 to 5 percent manganese metal, 1 to 5 percent magnesium fluoride, and 1 to 3 percent chromium oxide green.

### SUMMARY OF THE INVENTION

A first aspect of the present invention is specified in claim 1 of the following set of claims.

A preferred feature of the first aspect of the present invention is specified in claim 2 of the set of claims.

A second aspect of the present invention is specified in claim 3 of the set of claims.

Preferred features of the second aspect of the present invention are specified in claims 4 and 5 of the set of claims.

### BRIEF DESCRIPTION OF THE DRAWINGS

The invention is explained in the following description in view of the drawings that show:
FIG. 1 illustrates a cladding process using a multi-layer powder.
FIG. 2 illustrates a cladding process using a mixed layer powder.
FIG. 3 illustrates a cladding process using a cored filler wire and an energy beam.
FIG. 4 is a prior art chart illustrating the relative weldability of various superalloys.

### DETAILED DESCRIPTION OF THE INVENTION

The present inventors have developed a flux material and a materials joining process that can be used successfully to join and/or to repair the most difficult to weld superalloy materials and other alloy materials. Embodiments of the inventive process advantageously apply a powdered flux material over a superalloy substrate during a laser melting and re-solidifying process. The powdered flux material is effective to provide beam energy transmission and selective trapping, impurity cleansing, atmospheric shielding, bead shaping, cooling temperature control, and alloy addition in order to accomplish crack-free joining of superalloy materials without the necessity for high temperature hot box welding or the use of a chill plate or the use of inert shielding gas or vacuum conditions.

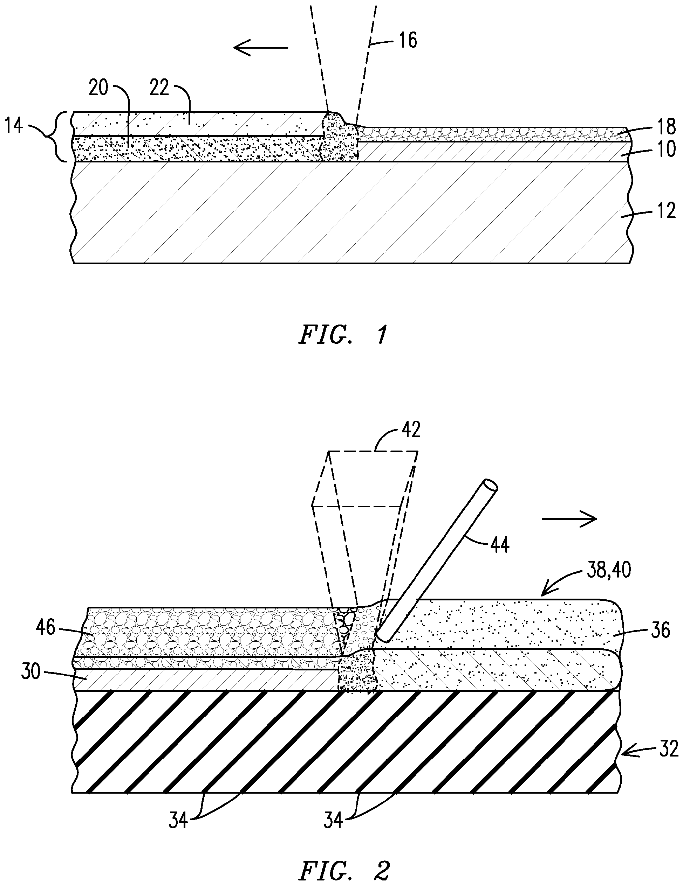

FIG. 1 illustrates a process where a layer of cladding 10 of a superalloy material is being deposited onto a superalloy substrate material 12 at ambient room temperature without any preheating of the substrate material 12 or the use of a chill plate. The substrate material 12 may form part of a gas turbine engine blade, for example, and the cladding process may be part of a repair procedure in some embodiments. A layer of granulated powder 14 is pre-placed on the substrate 12, and a laser beam 16 is traversed across the layer of powder 14 to melt the powder and to form the layer of cladding 10 covered by a layer of slag 18. The cladding 10 and slag 18 are formed from the layer of powder 14 which includes a layer of powdered superalloy material 20 covered by a layer of powdered flux material 22.

The flux material 22 and resultant layer of slag 18 provide a number of functions that are beneficial for preventing cracking of the superalloy cladding 10 and the underlying superalloy substrate material 12. First, they function to shield both the region of molten material and the solidified (but still hot) cladding material 10 from the atmosphere in the region downstream of the laser beam 16. The slag floats to the surface to separate the molten or hot metal from the atmosphere, and the flux may be formulated to produce a shielding gas in some embodiments, thereby avoiding or minimizing the use of expensive inert gas. Second, the slag 18 acts as a blanket that allows the solidified material to cool slowly and evenly, thereby reducing residual stresses that can contribute to post weld reheat or strain age cracking. Such slag blanketing over and adjacent to the deposit further enhances heat conduction normal to the substrate thereby promoting directional solidification capable of forming grains also elongated normal to the substrate. Third, the slag 18 helps to shape and support the pool of molten metal to keep it close to a desired 1/3 height/width ratio. Such slag shape control and metal support further reduces solidification stresses that would otherwise be necessarily borne by the solidifying metal alone. Fourth, the flux material 22 provides a cleansing effect for removing trace impurities such as sulfur and phosphorous that contribute to weld solidification cracking. Such cleansing may include deoxidation of the metal powder. Because the flux powder is in intimate contact with the metal powder, it is especially effective in accomplishing this function. Further, the flux material 22 must transmit the laser energy to facilitate heating of the metal powder and underlying substrate. It may also provide an energy absorption and trapping function to more effectively convert the laser beam 16 into heat energy, thus facilitating a precise control of heat input, such as within 1-2%, and a resultant tight control of material temperature during the process. Additionally, the flux may be formulated to compensate for loss of volatized or reacted elements during processing or to actively contribute elements to the deposit that are not otherwise provided by the metal powder itself. Together, these functionalities produce crack-free deposits of superalloy cladding on superalloy substrates at room temperature for materials that heretofore were believed to be capable of being welded or clad processed only with a hot box process or by using a chill plate.

The present inventors have found that commercially available fluxes such as those sold under the names Lincolnweld P2007, Bohler Soudokay NiCrW-412, ESAB OK 10.16 or 10.90, Special Metals NT100, Oerlikon OP76, Bavaria WP 380, Sandvik 50SW , 59S or SAS1 and Avesta 805 may be used when processing superalloy materials with laser energy, but that optimal results will not be achieved. In considering the shortcomings of employing such commercially available fluxes, the inventors have found that:
(1) Such known fluxes are typically formulated with consideration given to their electrical properties (e.g. arc stability, electrical conductivity), since they are used in a heating process involving electrical energy. While such considerations may be a valid factors with hybrid laser and arc processing, the electrical properties of a flux material are not a relevant consideration to processes involving the application of only laser energy.
(2) Such known fluxes are also not formulated to enhance optical laser beam capture and transmission, or to prevent or reduce the formation of plasma that could inhibit the laser energy from effectively reaching the substrate.
(3) Such known fluxes are also used with a solid wire, cored wire or strip electrode. Consequently, such known fluxes are generally formulated to include ingredients to enhance processing with such solid filler metal forms. For example, coated electrodes often require specific ingredients (e.g., sodium silicate, potassium silicate, sugar, dextrose) to find the flux mix and additional ingredients (e.g., glycerin, kaolin, talc, mica) to enhance extrudability over a wire and attachment thereon. Such ingredients that ensure smooth, crack free electrode coatings that are resistant to damage during handling are not of importance and may in fact be detrimental (e.g., release unwanted contaminants) during laser processing. As another example, flux cored wires must have very fine mesh flux ingredients to fit the core volume. Such fine particulate is also not needed for laser processing and may in fact be detrimental to the extent that such fine powder is difficult to preplace for feed to a point of processing. Consequently, many ingredients or mesh constraints that are essential to arc welding processing with solid filler metal are not relevant to laser processes, wherein powder is most often the preferred form of filler because of its inherent ability to capture light energy.
(4) Such known fluxes also may contain constituents that can scavenge undesirable elements (so-called "tramp" elements) such as sulfur, phosphorous, boron, lead and bismuth. Because superalloys are much more prone to solidification cracking than common wrought nickel based alloys, a flux formulated for laser process may need to be enriched and/or modified with respect to known fluxes to remove all or many of such tramp elements from the solidification process. Examples include enrichment in manganese, magnesium and calcium bearing compounds to effectively reduce sulfur and phosphorous content. On the other hand, whereas the tramp element boron may be somewhat controlled by conventional fluxes, with superalloy processing only limited control is appropriate because boron is essential for grain boundary strengthening.
(5) Such known fluxes may also contain certain ferro-metal additives to compensate for loss of metallic elements during processing or to further alloy the deposit. Because such commercial fluxes are formulated for wrought nickel based alloys containing iron, such ferro-metal additives may not be suitable for many non-ferrous nickel-based superalloys. Thus, in certain applications such as turbine blade and vane manufacture and repair involving non-ferrous superalloy materials (e.g., IN 738, IN 939, CM 247, PWA 1484, Rene Alloys 80, N4, 5 and 6) these ferro-metal additives may not be suitable.

Based upon the observations above, the following considerations are relevant to flux materials of the present disclosure finding applicability to laser welding, repair and manufacture of superalloy materials. Some of these considerations may also be relevant to applications involving other difficult to weld alloys (e.g., ODS alloys, titanium-based alloys, etc.).

First, with respect to electrical considerations, titanium dioxide is often used for arc stabilization. At least two of the commercially-available fluxes described above include titanium dioxide. The proposed flux for laser processing has no need for such stabilization. Therefore, titanium dioxide and other agents employed in known flux materials to affect electrical properties (e.g., potassium silicate, sodium silicate, rutile and potassium titanate) may be excluded from the present flux materials. In some instances, agents affecting electrical properties (such as titanium dioxide) may be included for other purposes such as slag formation or elemental addition. However, in these instances the proportion of such agents may differ considerably from proportions known to be suitable for enhancing electrical properties.

Other arc stabilizers include compounds having low dissociation energy and ionization potential (e.g. K₂O, Na₂O and Li₂O). Such compounds are often not well suited to flux materials of the present disclosure due to their propensity to undergo dissociation to form an optical "plasma" that prevents the laser energy from being absorbed and transferred to the process location. Such stabilizers and plasma generators may be excluded from the presently disclosed flux materials for laser processing. In some embodiments flux materials of the present disclosure do not contain substantial amounts of K₂O, Na₂O and Li₂O-meaning that less than 0.5% by weight of these compounds (individually or collectively) is contained. In some embodiments flux materials of the present disclosure are essentially free of K₂O, Na₂O and Li₂O-meaning that less than 0.1% by weight of these compounds (individually or collectively) is contained.

It is also known that fluorides can produce an erratic arc in conventional weld processing with fluoride-bearing fluxes. Because no arc is involved in laser processing, fluorides may be included (even in relatively enriched proportions) in flux materials of the present disclosure to control viscosity and scavenging effects that are important to laser processing.

Second, flux materials of the present disclosure are formulated to avoid the generation of byproducts (i.e., light and smoke) that can interfere with the delivery of the laser energy to the work piece. Combustible (especially organic) materials such as hydrocarbons may be avoided in flux materials of the present disclosure because they lead to such undesirable byproducts. Process conditions may also be modified to remove generated smoke using a vacuum or cross flow action near the point of processing.

Third, while known flux materials for submerged arc welding and electroslag welding are of relatively coarse mesh size, flux materials in some embodiments of the present disclosure have smaller particle sizes to accommodate laser processing with a powdered filler material. Course flux materials are known to work well for fillers of wire or strip geometry. By contrast, powdered filler metals that may be used for laser processing (due to superior light trapping efficiency) are typically in the form of fine powders and are of much higher density than commercially available fluxes. Therefore, laser cladding with flux may address potential issues with combining powders of discrepant size and density.

Specifically FIG. 2 illustrates another embodiment where a layer of cladding 30 of a superalloy material is being deposited onto a superalloy substrate material 32, which in this embodiment is illustrated as a directionally solidified material having a plurality of columnar grains 34. In this embodiment, the layer of powder 36 is pre-placed or fed onto the surface of the substrate material 32 as a homogeneous layer including a mixture of both powdered alloy material 38 and powdered flux material 40. The layer of powder 36 may be one to several millimeters in thickness in some embodiments rather than the fraction of a millimeter typical with known selective laser melting and sintering processes. Other embodiments may include a thickness of the powder layer 36 or the flux layer 22 from 5 mm to 15 mm; or that an amount of the flux material is selected such that a thickness of the layer of the slag 18, 46 ranges from 0.5 mm to 5 mm.

Commercially available powdered prior art flux materials have particle sizes typically ranging from 0.5 - 2 mm (500 - 2,000 micron). Powdered alloy material that is typically used for laser cladding may have a particle size range of from 0.02 - 0.04 mm or 0.02 - 0.08 mm (or 22 - 88 micron) or other sub-range therein. This difference in particle size may work well in the embodiment of FIG. 1 where the materials constitute separate layers. However, in the embodiment of FIG. 2 it may be advantageous for the powdered alloy material 38 and the powdered flux material 40 to have mesh size ranges that either partially or totally overlap (same mesh range) one another, in order to facilitate mixing and feeding of the powders and to provide improved flux coverage during the melting process. Tests have been conducted with satisfactory results using flux material crushed to smaller than commercially available sizes, such as to a size range of 105 - 841 microns (-20/+150 Tyler mesh) for pre-placed powder applications and to a size of less than 105 microns (-150 Tyler mesh) for feed powder applications. Optimum volume ratio of flux to alloy powder is of the order of 1:1, however a range from 3:2 to 2:3 has been demonstrated.

If powdered metal is to be mixed with flux, it can be important to optimize size to ensure good mixing. The inventors have found and hereby teach that for mixing applications, commercially available fluxes need to be first crushed. For newly manufactured fluxes the mesh range should overlap the mesh range of the powdered metal. If powdered metal is to be made with flux as a constituent (conglomerate particles), then such mesh considerations are not as important. If powder metal and flux is to be fed, then the flux needs to closely match the mesh range of the metal powder to ensure good feeding. If flux is to be included in the core of a wire, it must meet the mesh requirement for such flux cored wire manufacture.

Fourth, certain elements are notoriously problematic when welding nickel based alloys. For example, unintentionally added ("tramp") elements include sulfur, phosphorous, lead, and bismuth. In addition, boron, though not a tramp element, is sometimes added to improve creep and rupture strength and to refine grain boundaries. All of these elements (and sometimes in combination with other superalloy constituents including silicon, carbon, oxygen and nitrogen) can be associated with solidification cracking (aka hot cracking or liquation cracking). Perhaps the foremost problematic element is sulfur. Sulfur causes such cracking by way of the formation of low melting point eutectic phases (e.g. Ni₃S₂) at the last locations to solidify. Such low melting point films cannot sustain contraction stresses during solidification and, therefore, cracking results. Sulfur can be scavenged by manganese bearing compounds such as MnO. Calcium and magnesium reagents are also known to reduce sulfur during vacuum induction melting of nickel based alloys. CaS and MgS can be removed as slag. Mg can also change sulfide shape and eliminate grain boundary sulfide films. CaF₂-CaO-Al₂O₃ mixtures have also been used to reduce sulfur. Cerium is also known to reduce sulfur (and oxygen) by producing stable cerium oxysulfides (e.g. Ce₂O₂S, CeS, Ce₂S₃, Ce₃S₄). CaF₂, CaO, Ca and CeO₂ are recognized compounds for such slag removal of sulfur (e.g. in electroslag remelting).

In some embodiments the flux for laser processing is enriched with such compounds, and more particularly, the flux may utilize calcium, magnesium and manganese carbonates (CaCO₃, MgCO₃ and MnCO₃) and oxides (CaO, MgO, MnO, MnO₂) at elevated concentrations for superalloy laser processing. To the knowledge of the present Inventors, only one of the major manufacturers of nickel base welding fluxes utilizes a carbonate of calcium. The present teaching proposes an embodiment using a mixture of all three carbonates (Ca, Mg and Mn) at concentrations up to 30 weight percent. The calcium, magnesium and manganese will contribute to the above described scrubbing (removal) of sulfur by way of segregation to and removal with the slag. Also the carbonate compounds will tend to form carbon monoxide and carbon dioxide gases to enhance shielding functions. This is important because the process is not optically submerged and some additional shielding function by way of such carbonates can improve the processing. Calcium fluoride and oxides of calcium, magnesium and manganese are also beneficial for scavenging sulfur and are often included at elevated levels of up to about 30 weight percent.

Another problematic element is phosphorous which can promote solidification cracking by the formation of low melting point phosphides. Phosphorous can be controlled by including silica, CaF₂ and other oxides such as CaO, CaCO₃ and FeO to control thermodynamics and to segregate phosphorous to the slag without re-entry.

Boron, while potentially problematic, may not be controlled or eliminated in embodiments of the present flux for laser processing. The reason is that boron has the above mentioned advantages and may be beneficial to include - albeit in limited quantities.

Fifth, ferro-metal additives are not proposed to be added to the present flux for laser processing due to their incompatibility with many non-ferrous superalloy materials. In some embodiments flux materials of the present disclosure do not contain substantial amounts of iron-meaning that less than 0.5% by weight of iron is contained. In some embodiments flux materials of the present disclosure are essentially free of iron-meaning that less than 0.1% by weight of elemental iron is contained.

The present inventors recognize that an amount of titanium may be lost during laser heated deposition of powdered superalloy materials, most likely due to reaction with oxygen and subsequent volatizing or removal with slag, and that the titanium content of the deposited material may be less than the titanium content of the original powdered superalloy material. The present disclosure allows for additional titanium to be provided to the melt via the flux material in order to compensate for this loss. While not needed for arc stabilization (see above), TiO₂ (e.g. Brookite) or another titanium containing compounds may be included as a constituent of the present flux to accomplish this alloy compensation. Alternate titanium contributors could include titanite (CaTiSiO₅) which is a mineral source of TiO₂ and which would simultaneously contribute calcium to help reduce phosphorous or sulfur, and nickel titanium alloys (such as Nitinol which is a shape memory alloy). Most particularly, the content of titanium in the flux material will be responsive to the amount of titanium in the superalloy composition. For example, the flux may contain about 1 wt.% of titanium for a deposited or substrate superalloy material having up to 2 wt.% of titanium, or about 2 wt.% of titanium for superalloy material having 2-4 wt.% of titanium, or about 3 wt.% of titanium for superalloy material having 4-6 wt.% of titanium.

Many prior art fluxes claim to be neutral and not to add or subtract from the composition of the deposit. SAW fluxes can be especially useful in this respect because the arc is buried under the flux and many elements including dangerous hexavalent chromium are not substantially released to the surrounding environment. In contrast, the present inventors have found that when a flux material is processed with laser energy, substantial reaction and optical emission occur near and above the top of the bed of flux-thereby facilitating the transfer of gasses out of the flux. In the event of elemental loss of aluminum (∼1% or more) when cladding, (even using flux containing substantial alumina) additional compensation for aluminum may be necessary. In particular, while alumina is used in commercially available flux formulations to form slag and to enhance slag detachability, it may not effectively vector aluminum into the deposited material.

Loss of aluminum is problematic because aluminum is critical to the strength and oxidation resistance of a superalloy material. Innovatively, embodiments of the present invention include aluminum in the form of aluminum carbonate Al₂(CO₃)₃. Aluminum carbonate is unstable and under certain conditions can decompose to produce carbon dioxide CO₂ and aluminum hydroxide Al(OH)₃. The present inventors have realized that when used in a flux for laser processing, aluminum carbonate will dissociate due to laser interaction, and will generate elemental aluminum along with carbon monoxide and carbon dioxide at the location of dissociation. Advantageously, the elemental aluminum is thus made available to compensate for the above-described loss of deposited aluminum, and the gasses prevent the oxidation of the elemental aluminum and provide overall shielding of the molten metal from atmospheric oxidation and nitridation.

An alternate source of aluminum for use in flux materials of the present disclosure is a mineral known as Dawsonite composed of sodium aluminum carbonate hydroxide NaAlCO₃(OH)₂. Laser decomposition of Dawsonite forms not only elemental aluminum, carbon monoxide and carbon dioxide, but also hydrogen, which creates a beneficial reducing atmosphere.

The following alloy classification groups contain the enumerated amounts of aluminum and titanium:

| Alloy Groups | Aluminum (%) | Titanium (%) |
|---|---|---|
| A0/2 | 0-2 | |
| A2/4 | 2-4 | |
| A4/6 | 4-6 | |
| T0/2 | | 0-2 |
| T2/4 | | 2-4 |
| T4/6 | | 4-6 |

The teaching herein proposes using a combination of Al₂(CO₃)₂, NaAlCO₃(OH)₂ and even pure aluminum foil (or compatible aluminum alloy) to add aluminum for the A groups above. In the A0/2 group a weight percent of the flux of at least 1% aluminum is expected to be needed. In A2/4 at least 2% is expected and in 4/6 at least 3% is expected.

The teaching herein also proposes using a combination of TiO₂, CaTiSiO₅ and even pure titanium foil (or compatible titanium alloy) to add titanium for the T groups above. In the T0/2 group a weight percent of the flux of at least 1% titanium is expected to be needed. In T2/4 at least 2% is expected and in T4/6 at least 3% is expected.

A given alloy can have both A and T classification and in that case both must be addressed using the additives associated with each classification. Some examples of groupings that include commercial alloys are as follows:

| Alloy Groups | Commercial Alloys |
|---|---|
| A4/6 | PWA1484, Rene N5, Rene 142 |
| A2/4 & T0/2 | Rene 41 |
| A4/6 & T0/2 | CM 247, CMSX4 |
| A0/4 & T2/4 | IN 939 |
| A2/4 & T2/4 | IN 738 |
| A2/4 & T4/6 | Rene 80 |

Other compounds may be beneficial in the flux for combining an elemental addition function and a shielding function. For example, cobalt, nickel and lanthanum carbonates may be used to add elemental cobalt, nickel and lanthanum, respectively, along with carbonate shielding. Furthermore, the scavenging and shielding functions may be combined, such as by including manganese carbonate to add manganese for scavenging sulfur and carbonate for shielding. Other useful compounds include boron carbide, aluminum carbide, silicon carbide, calcium carbide, titanium carbide, vanadium carbide, chromium carbide, zirconium carbide, nickel carbide, hafnium carbide, tungsten carbide, nickel carbonate and titanium aluminide which upon dissociation could add elemental metals and desired carbides and/or carbon reaction with oxygen to produce carbon monoxide and carbon dioxide shielding.

Other constituents in the flux of the present invention which target slag fluidity, formation and detachability may correspond to constituents contained in commercially available fluxes in the proposed and otherwise special fluxes for laser processing. For example, certain fluorides, silicates, aluminates and titanates may be included to ensure that the slag is viscous, has a melting point below that of the base metal, has a density less than that of the base metal, and readily detaches from the deposit upon cooling.

Flux materials of the present disclosure may be formulated to contain at least one of the following components: (i) an optically transmissive constituent; (ii) a viscosity/fluidity enhancer; (iii) a shielding agent; (iv) a scavenging agent; and (v) a vectoring agent.

Optically transmissive constituents include metal oxides, metal salts and metal silicates such as alumina (Al₂O₃), silica (SiO₂), zirconium oxide (ZrO₂), sodium silicate (Na₂SiO₃), potassium silicate (K₂SiO₃), and other compounds capable of optically transmitting laser energy (e.g., as generated from NdYag and Yt fiber lasers). Viscosity/fluidity enhancers include metal fluorides such as calcium fluoride (CaF₂), cryolite (Na₃AlF6) and other agents known to enhance viscosity and/or fluidity (e.g., reduced viscosity with CaO, MgO, Na₂O, K₂O and increasing viscosity with Al₂O₃ and TiO₂) in welding applications. Shielding agents include metal carbonates such as calcium carbonate (CaCO₃), aluminum carbonate (Al₂(CO₃)₃), dawsonite (NaAl(CO₃)(OH)₂), dolomite (CaMg(CO₃)₂), magnesium carbonate (MgCO₃), manganese carbonate (MnCO₃), cobalt carbonate (CoCO₃), nickel carbonate (NiCO₃), lanthanum carbonate (La₂(CO3)₃) and other agents known to form shielding and/or reducing gases (e.g., CO, CO₂, H2). Scavenging agents include metal oxides and fluorides such as calcium oxide (CaO), calcium fluoride (CaF₂), iron oxide (FeO), magnesium oxide (MgO), manganese oxides (MnO, MnO₂), niobium oxides (NbO, NbO₂, Nb₂O₅), titanium oxide (TiO₂), zirconium oxide (ZrO₂) and other agents known to react with detrimental elements such as sulfur and phosphorous to form low-density byproducts expected to "float" into a resulting slag layer. Vectoring agents include titanium, zirconium, boron and aluminum containing compounds and materials such as titanium alloys (Ti), titanium oxide (TiO₂), titanite (CaTiSiO₅), aluminum alloys (Al), aluminum carbonate (Al₂(CO₃)₃), dawsonite (NaAl(CO₃)(OH)₂), borate minerals (e.g., kernite, borax, ulexite, colemanite), nickel titanium alloys (e.g., Nitinol), niobium oxides (NbO, NbO₂, Nb₂O₅) and other metal-containing compounds and materials used to supplement molten alloys with elements.

In some embodiments flux materials of the present disclosure include:

| | |
|---|---|
| 5 - 60% by weight of | optically transmissive constituent(s) |
| 10 - 70% by weight of | viscosity/fluidity enhancer(s) |
| 0 - 40% by weight of | shielding agent(s) |
| 5 - 30% by weight of | scavenging agent(s) |
| 0 - 7% by weight of | vectoring agent(s). |

In some embodiments flux materials of the present disclosure include:

| | |
|---|---|
| 20 - 40% by weight of | optically transmissive constitutent(s) |
| 15 - 35% by weight of | viscosity/fluidity enhancer(s) |
| 5 - 25% by weight of | shielding agent(s) |
| 10 - 25% by weight of | scavenging agent(s) |
| 0 - 5% by weight of | vectoring agent(s). |

In some embodiments flux materials of the present disclosure include:

| | |
|---|---|
| 5 - 60% by weight of | metal oxide(s) |
| 10 - 70% by weight of | metal fluoride(s) |
| 5 - 40% by weight of | metal silicate(s) |
| 0 - 40% by weight of | metal carbonate(s) |

In some embodiments flux materials of the present disclosure include:

| | |
|---|---|
| 5 - 40% by weight of | Al₂O₃, SiO₂, and/or ZrO₂ |
| 10 - 50% by weight of | metal fluoride(s) |
| 5 - 40% by weight of | metal silicate(s) |
| 0 - 40% by weight of | metal carbonate(s) |
| 15 - 30% by weight of | other metal oxide(s). |

In some embodiments flux materials of the present disclosure include:

| | | |
|---|---|---|
| 5 - 60% by weight of | at least one of: | Al₂O₃ |
| | | SiO₂ |
| | | Na₂SiO₃ |
| | | K₂SiO₃ |
| 10 - 50% by weight of | at least one of: | CaF₂ |
| | | Na₃AlF₆ |
| | | Na₂O |
| | | K₂O |
| 1 - 30% by weight of | at least one of: | CaCO₃ |
| | | Al₂(CO₃)₃, |
| | | NaAl(CO₃)(OH)₂ |
| | | CaMg(CO₃)₂ |
| | | MgCO₃ |
| | | MnCO₃ |
| | | CoCO₃ |
| | | NiCO₃ |
| | | La₂(CO3)₃ |
| 15 - 30% by weight of | at least one of: | CaO |
| | | MgO |
| | | MnO |
| | | ZrO₂ |
| | | TiO₂ |
| 0 - 5% by weight of | at least one of: | Ti |
| | | Al |
| | | TiO₂ |
| | | CaTiSiO₅. |

In some embodiments the flux materials of the present disclosure include:

| | | |
|---|---|---|
| 5 - 40% by weight of | | Al₂O₃ |
| 10 - 50% by weight of | | CaF₂ |
| 5 - 30% by weight of | | SiO₂ |
| 1 - 30% by weight of | at least two of: | CaCO₃ |
| | | Al₂(CO₃)₃, |
| | | NaAl(CO₃)(OH)₂ |
| | | CaMg(CO₃)₂ |
| | | MgCO₃ |
| | | MnCO₃ |
| | | CoCO₃ |
| | | NiCO₃ |
| | | La₂(CO3)₃ |
| 15 - 30% by weight of | at least one of: | CaO |
| | | MgO |
| | | MnO |
| | | ZrO₂ |
| | | TiO₂ |
| 0 - 5% by weight of | at least one of: | Ti |
| | | Al |
| | | TiO₂ |
| | | CaTiSiO₅. |

In some embodiments the flux materials of the present disclosure include:

| | | |
|---|---|---|
| 5 - 40% by weight of | | Al₂O₃ |
| 10 - 50% by weight of | | CaF₂ |
| 5 - 30% by weight of | | SiO₂ |
| 1 - 30% by weight of | at least one of: | CaCO₃ |
| | | MgCO₃ |
| | | MnCO₃ |
| 15 - 30% by weight of | at least two of: | CaO |
| | | MgO |
| | | MnO |
| | | ZrO₂ |
| | | TiO₂ |
| 0 - 5% by weight of | at least one of: | Ti |
| | | Al |
| | | TiO₂ |
| | | CaTiSiO₅ |
| | | Al₂(CO₃)₃ |
| | | NaAl(CO₃)(OH)₂ |

In some embodiments the flux materials of the present disclosure include:

| | | |
|---|---|---|
| 5 - 30% by weight of | | Al₂O₃ |
| 10 - 50% by weight of | | CaF₂ |
| 5 - 30% by weight of | | SiO₂ |
| 1 - 30% by weight of | at least one of: | CaCO₃ |
| | | Al₂(CO₃)₃, |
| | | NaAl(CO₃)(OH)₂ |
| | | CaMg(CO₃)₂ |
| | | MgCO₃ |
| | | MnCO₃ |
| 15 - 30% by weight of | at least one of: | CaO |
| | | MgO |
| | | MnO |
| | | ZrO₂ |
| | | TiO₂ |
| 1 - 5% by weight of | at least one of: | Ti |
| | | Al |
| | | TiO₂ |
| | | CaTiSiO₅. |

In some embodiments the flux materials of the present disclosure include zirconia (ZrO₂) and at least one metal silicate, metal fluoride, metal carbonate, metal oxide (other than zirconia), or mixtures thereof. In such cases the content of zirconia is often greater than about 7.5 percent by weight, and often less than about 25 percent by weight. In other cases the content of zirconia is greater than about 10 percent by weight and less than 20 percent by weight. In still other cases the content of zirconia is greater than about 3.5 percent by weight, and less than about 15 percent by weight. In still other cases the content of zirconia is between about 8 percent by weight and about 12 percent by weight.

In some embodiments the flux materials of the present disclosure include a metal carbide and at least one metal oxide, metal silicate, metal fluoride, metal carbonate, or mixtures thereof. In such cases the content of the metal carbide is less than about 10 percent by weight. In other cases the content of the metal carbide is equal to or greater than about 0.001 percent by weight and less than about 5 percent by weight. In still other cases the content of the metal carbide is greater than about 0.01 percent by weight and less than about 2 percent by weight. In still other cases the content of the metal carbide is between about 0.1 percent and about 3 percent by weight.

In some embodiments the flux materials of the present disclosure include at least two metal carbonates and at least one metal oxide, metal silicate, metal fluoride, or mixtures thereof. For example, in some instances the flux materials include calcium carbonate (for phosphorous control) and at least one of magnesium carbonate and manganese carbonate (for sulfur control). In other cases the flux materials include calcium carbonate, magnesium carbonate and manganese carbonate. Some flux materials comprise a ternary mixture of calcium carbonate, magnesium carbonate and manganese carbonate such that a proportion of the ternary mixture is equal to or less than 30% by weight relative to a total weight of the flux material. A combination of such carbonates (binary or ternary) is beneficial in most effectively scavenging multiple tramp elements.

All of the percentages (%) by weight enumerated above are based upon a total weight of the flux material being 100%.

Laser processes of the present invention may employ inventive flux materials as described above, or may employ commercial fluxes (often modified by grinding, etc.), or may employ mixtures of flux materials as described above with commercial fluxes.

The energy beam 42 in the embodiment of FIG. 2 is a diode laser beam having a generally rectangular cross-sectional shape, although other known types of energy beams may be used, such as electron beam, plasma beam, one or more circular laser beams, a scanned laser beam (scanned one, two or three dimensionally), an integrated laser beam, etc. The rectangular shape may be particularly advantageous for embodiments having a relatively large area to be clad, such as for repairing the tip of a gas turbine engine blade.

Advantages of this process over known laser melting or sintering processes include: high deposition rates and thick deposit in each processing layer; improved shielding that extends over the hot deposited metal without the need for inert gas; flux will enhance cleansing of the deposit of constituents that otherwise lead to solidification cracking; flux will enhance laser beam absorption and minimize reflection back to processing equipment; slag formation will shape and support the deposit, preserve heat and slow the cooling rate, thereby reducing residual stresses that otherwise contribute to strain age (reheat) cracking during post weld heat treatments; flux may compensate for elemental losses or add alloying elements; and powder and flux pre-placement or feeding can efficiently be conducted selectively because the thickness of the deposit greatly reduces the time involved in total part building.

The embodiment of FIG. 2 also illustrates the use of a base alloy feed material 44 (alternatively referred to as a filler material). The feed material 44 may be in the form of a wire or strip that is fed or oscillated toward the substrate 32 and is melted by the energy beam 42 to contribute to the melt pool. If desired, the feed material may be preheated (e.g. electrically) to reduce overall energy required from the laser beam.

FIG. 3 illustrates an embodiment where a layer of superalloy material 60 is deposited onto a superalloy substrate 62 using an energy beam such as laser beam 64 to melt a filler material 66. The filler material 66 includes a metal sheath 68 that is constructed of a material that can be conveniently formed into a hollow shape, such as nickel or nickel-chromium or nickel-chromium-cobalt, and a powdered material 70 is selected such that a desired superalloy composition is formed when the filler material 66 is melted by the laser beam 64. The powdered material 70 may include powdered flux as well as alloying elements. The heat of the laser beam 64 melts the filler material 66 and forms a layer of the desired superalloy material 60 covered by a layer of slag 72. As before, the filler material may be preheated, such as with an electrical current, to reduce process energy required from the laser beam. The flux performs the same functions in this embodiment as described with regard to FIGs. 1 and 2 above.

It is appreciated that the advantages of utilizing powdered flux material with a superalloy substrate are realized whether or not an additive cladding material is deposited. Surface cracks in a superalloy substrate may be repaired by covering the surface with powdered flux material, then heating the surface and the flux material to form a melt pool with a floating slag layer. Upon solidification of the melt pool under the protection of the slag layer, a clean surface with no cracks will be formed.

Repair processes for superalloy materials may include preparing the superalloy material surface to be repaired by grinding as desired to remove defects, cleaning the surface, then pre-placing or feeding a layer of powdered material containing flux material onto the surface, then traversing an energy beam across the surface to melt the powder and an upper layer of the surface into a melt pool having a floating slag layer, then allowing the melt pool and slag to solidify. The melting functions to heal any defects at the surface of the substrate, leaving a renewed surface upon removal of the slag, which is typically accomplished by known mechanical and/or chemical processes. The powdered material may be only flux material, or for embodiments where a layer of superalloy cladding material is desired, the powdered material may contain metal powder, either as a separate layer placed under a layer of powdered flux material, or mixed with the powdered flux material, or combined with the flux material into composite particles, such that the melting forms the layer of cladding material on the surface. Optionally, a feed material may be introduced into the melt pool in the form of a strip or wire. The powdered metal and feed material (if any), as well as any metal contribution from the flux material which may be neutral or additive, are combined in the melt pool to produce a cladding layer having the composition of a desired superalloy material.

In one exemplary process, mixed submerged arc welding flux and alloy 247 powder was pre-placed from 2.5 to 5.5 mm depths and demonstrated to achieve crack free laser clad deposits after final post weld heat treatment. Ytterbium fiber laser power levels from 0.6 up to 2 kilowatts have been used with galvanometer scanning optics making deposits from 3 to 10 mm in width at travel speeds on the order of 125 mm/min. Absence of cracking has been confirmed by dye penetrant testing and metallographic examination of deposit cross sections. It will be appreciated that alloy 247 falls within the most difficult area of the zone of non-weldability as illustrated in FIG. 4.

Moreover, the innovation described herein is not limited to the gamma prime and gamma double prime strengthened superalloys shown in FIG. 4. Oxide dispersion strengthened (ODS) superalloy powder may be deposited using laser energy and flux powder in accordance with embodiments of the invention. In particular, it may be appropriate to allow a certain level of oxide formation in the melt to match the base metal composition and properties of ODS alloys. Such deposition may be accomplished, for example, without the level of shielding provided by carbonates or such deposition may be accomplished with additional intentional additions of oxides. Moreover, ceramics, titanium aluminide and cermet materials may be deposited in other embodiments. Such application would be expected to extend from the aforementioned approach without consideration for solidification cracking additives and without consideration for metallic element compensation or alloying.

All ranges disclosed herein are to be understood to encompass any and all sub-ranges subsumed therein. For example, a range of "0 - 30%" can include any and all sub-ranges between (and including) the minimum value of 0% and the maximum value of 30%, that is, any and all sub-ranges having a minimum value of equal to or greater than zero and a maximum value of equal to or less than 30%, e.g., 1 - 5%.

The above written description of the invention provides a manner and process of making and using it such that any person skilled in this art is enabled to make and use the same, this enablement being provided in particular for the subject matter of the appended claims. As used herein, the phrases "selected from the group consisting of," "chosen from," and the like include mixtures of the specified materials. As used herein the words "a" and "an" and the like carry the meaning of "one or more." For example, the phrase "comprising ... a compound" connotes the presence of either a single compound or a mixture of compounds.

## Claims

1. A flux composition for laser welding, comprising:
5 to 85 percent by weight of a metal oxide, a metal silicate, or both;
10 to 70 percent by weight of a metal fluoride; and
1 to 30 percent by weight of a metal carbonate,
relative to a total weight of the composition, wherein:
the flux composition contains less than 0.5 percent by weight of iron; and
the flux composition contains less than 0.5 percent by weight of Li₂O, Na₂O or K₂O,
wherein the flux composition comprises 5 percent or less by weight of at least one selected from the group consisting of titanium, a titanium alloy, titanium oxide, titanite, aluminum, an aluminum alloy, aluminum carbonate, dawsonite, a nickel titanium alloy, zirconium and a zirconium alloy, relative to a total weight of the composition,
wherein the flux composition comprises at least two metal carbonates,
wherein the flux composition comprises greater than 7.5 percent by weight of zirconia, relative to a total weight of the composition,
wherein the flux composition further comprises a metal carbide.

2. The composition of claim 1, comprising CaCO₃, MgCO₃ and MnCO₃.

3. A laser welding process, comprising:
melting a metallic material in the presence of a flux material comprising the composition of claim 1, to form a melt pool covered by a layer of molten slag; and
allowing the melt pool and the molten slag to cool and solidify to form a metallic layer covered by a layer of solid slag.

4. The process of claim 3, comprising:
pre-placing or feeding a powdered material comprising a powder layer of an alloy material covered by a powder layer of the flux material onto a surface of a superalloy substrate;
melting the powdered material with a laser beam to form the melt pool covered by the layer of the molten slag; and
allowing the melt pool and the molten slag to cool and solidify to form a layer of a desired superalloy material clad over the superalloy substrate.

5. The process of claim 3, wherein at least one of the following is satisfied:
a thickness of the powder layer of the flux material ranges from 5 mm to 15 mm; and
an amount of the flux material is selected such that a thickness of the layer of the solid slag ranges from 0.5 mm to 5 mm.

## Patentansprüche

1. Flussmittelzusammensetzung zum Laserschweißen, die Folgendes umfasst:
5 bis 85 Gewichtsprozente eines Metalloxids, eines Metallsilicats oder von beidem,
10 bis 70 Gewichtsprozente eines Metallfluorids und
1 bis 30 Gewichtsprozente eines Metallcarbonats,
relativ zu einem Gesamtgewicht der Zusammensetzung, wobei
die Flussmittelzusammensetzung weniger als 0,5 Gewichtsprozente Eisen enthält und
die Flussmittelzusammensetzung weniger als 0,5 Gewichtsprozente Li₂O, Na₂O oder K₂O enthält,
wobei die Flussmittelzusammensetzung 5 oder weniger Gewichtsprozente Titan, einer Titanlegierung, Titanoxid, Titanit, Aluminium, einer Aluminiumlegierung, Aluminiumcarbonat, Dawsonit, einer Nickel-Titan-Legierung, Zirkonium und/oder einer Zirkoniumlegierung umfasst, relativ zu einem Gesamtgewicht der Zusammensetzung,
wobei die Flussmittelzusammensetzung wenigstens zwei Metallcarbonate umfasst,
wobei die Flussmittelzusammensetzung größer 7,5 Gewichtsprozente Zirkoniumdioxid umfasst, relativ zu einem Gesamtgewicht der Zusammensetzung,
wobei die Flussmittelzusammensetzung ferner ein Metallcarbid umfasst.

2. Zusammensetzung nach Anspruch 1, die CaCO₃, MgCO₃ und MnCO₃ enthält.

3. Laserschweißverfahren, das Folgendes umfasst:
Schmelzen eines metallischen Materials in Gegenwart eines Fließmaterials, das die Zusammensetzung nach Anspruch 1 umfasst, um ein Schmelzbad zu bilden, das von einer Schicht geschmolzener Schlacke bedeckt ist, und
Abkühlen- und Festwerdenlassen des Schmelzbads und der geschmolzenen Schlacke, um eine metallische Schicht zu bilden, die von einer Schicht fester Schlacke bedeckt ist.

4. Verfahren nach Anspruch 3, das Folgendes umfasst:
Vorabplatzieren oder Zuführen eines pulverförmigen Materials, das eine Pulverschicht eines Legierungsmaterials umfasst, das von einer Pulverschicht des Fließmaterials bedeckt ist, auf eine Oberfläche eines Superlegierungssubstrats,
Schmelzen des pulverförmigen Materials mit einem Laserstrahl, um das Schmelzbad zu bilden, das von der Schicht der geschmolzenen Schlacke bedeckt wird, und
Abkühlen- und Festwerdenlassen des Schmelzbads und der geschmolzenen Schlacke, um eine Schicht aus einem erwünschten Superlegierungsmaterial zu bilden, die über das Superlegierungssubstrat aufgebracht wird.

5. Verfahren nach Anspruch 3, wobei wenigstens eine der folgenden Bedingungen erfüllt ist:
eine Dicke der Pulverschicht des Flussmaterials beträgt zwischen 5 mm und 15 mm und
eine Menge des Flussmaterials ist so gewählt, dass eine Dicke der Schicht der festen Schlacke zwischen 0,5 mm und 5 mm beträgt.

## Revendications

1. Composition de flux pour soudage au laser, comprenant :
5 à 85 pour-cent en poids d'un oxyde de métal, d'un silicate de métal ou des deux ;
10 à 70 pour-cent en poids d'un fluorure de métal, et
1 à 30 pour-cent en poids d'un carbonate de métal,
par rapport à un poids total de la composition, étant entendu :
que la composition de flux contient moins de 0,5 pour-cent en poids de fer, et
que la composition de flux contient moins de 0,5 pour-cent en poids de Li₂O, de Na₂O ou de K₂O ;
étant entendu que la composition de flux comprend 5 pour-cent ou moins en poids d'au moins un composant sélectionné dans le groupe constitué du titane, d'un alliage de titane, d'un oxyde de titane, de la titanite, de l'aluminium, d'un alliage d'aluminium, d'un carbonate d'aluminium, de la dawsonite, d'un alliage de nickel et de titane, du zirconium et d'un alliage de zirconium, par rapport à un poids total de la composition ;
étant entendu que la composition de flux comprend au moins deux carbonates de métal ;
étant entendu que la composition de flux comprend plus de 7,5 pour-cent en poids d'oxyde de zirconium, par rapport à un poids total de la composition ;
étant entendu que la composition de flux comprend par ailleurs un carbure de métal.

2. Composition selon la revendication 1, comprenant du CaCO₃, du MgCO₃ et du MnCO₃.

3. Procédé de soudage au laser, consistant :
à faire fondre un matériau métallique en présence d'un matériau de flux comprenant la composition selon la revendication 1, pour former un bain de fusion couvert d'une couche de laitier en fusion, et
à laisser le bain de fusion et le laitier en fusion se refroidir et se solidifier pour former une couche métallique couverte par une couche de laitier solide.

4. Procédé selon la revendication 3, consistant :
à placer au préalable ou à amener un matériau en poudre comprenant une couche de poudre d'un matériau allié couverte d'une couche de poudre du matériau de flux sur une surface d'un substrat en superalliage ;
à faire fondre le matériau en poudre avec un faisceau laser pour former le bain de fusion couvert de la couche du laitier en fusion, et
à laisser le bain de fusion et le laitier en fusion se refroidir et se solidifier pour former une couche d'un revêtement en matériau superallié voulu par-dessus le substrat superallié.

5. Processus selon la revendication 3, étant entendu qu'il est satisfait à au moins l'une des conditions suivantes :
une épaisseur de la couche de poudre du matériau de flux va de 5 mm à 15 mm, et
une quantité du matériau de flux est choisie telle qu'une épaisseur de la couche du laitier solide va de 0,5 mm à 5 mm.
